# EUROPEAN PATENT SPECIFICATION

(11) **EP 2 482 752 B1**
(45) Date of publication and mention of the grant of the patent: **03.12.2014**
(21) Application number: 09748852.2
(22) Date of filing: 02.10.2009
(51) Int. Cl.: A61C 7/20, A61C 7/22

(54) **ORTHODONTIC ARCHWIRE WITH INTEGRAL ELEMENTS EXERTING FORCE ON THE TEETH**
ORTHODONTISCHER DRAHT MIT INTEGRALEN ELEMENTEN, DIE EINE KRAFT AUF DIE ZÄHNE AUSÜBEN
ARC ORTHODONTIQUE AVEC ÉLÉMENTS INTÉGRÉS EXERÇANTS UNE FORCE SUR LES DENTS

(43) Date of publication of application: 08.08.2012
(73) Proprietor: Chiaramonte, Paola, 37126 Verona (IT); Recchia, Michele, 37126 Verona (IT)
(72) Inventor: Chiaramonte, Paola, 37126 Verona (IT)
(74) Representative: Feltrinelli, Secondo Andrea
(86) International application number: PCT/IB2009/054315
(87) International publication number: WO 2011/039573

(56) References cited:
- EP-A2- 1 405 610
- WO-A2-2009/022986
- FR-A1- 2 919 489
- US-A- 3 464 114
- US-A- 3 593 421
- US-A- 4 583 944
- US-A- 5 910 008
- US-A1- 2004 131 989
- US-A1- 2005 244 781
- US-A1- 2007 154 859

## Description

### TECHNICAL FIELD OF THE INVENTION

The present invention relates to an orthodontic appliance provided with an arch wire.

### BACKGROUND OF THE INVENTION

Appliances are often used in orthodontics which are capable of modifying the position of a tooth or of a set of teeth, thus correcting aesthetic and/or functional defects, realigning or repositioning the dental arch correctly.

The appliances normally used consist of a metal arch wire fixed to plates (brackets) that are positioned onto the teeth.

The movement is obtained thanks to the application of relatively weak forces at predetermined time intervals. A further type of appliance consists of a brace aligner, generally of a transparent material, to be positioned around the dental arch to obtain the realignment thereof.

The disadvantage of the above appliances consists in that the force for moving a tooth is obtained by acting as a lever on one or more nearby teeth, which in this way are moved as well, and differently moved relative to their original position.

Moreover, with the traditional or brace appliances, the movement of a tooth along the plane perpendicular to the dental arch (torque movements) is achieved in difficult way over very long periods of time.

US 2004 / 131 989 A1 describes an orthodontic appliance with an arch-wire attached to the teeth of a patient through brackets. A second arch-wire is connected to some of the brackets by attachment elements.

US-A-4 583 944 describes an orthodontic appliance with an arch-wire attached to the teeth of a patient through brackets. Hook elements suitable for stressing a tooth to be repositioned are connected to the arch-wire.

US 2005 / 244 781 A1 describes an orthodontic appliance with an arch-wire attached to the teeth of a patient through brackets. A second arch-wire is connected to the brackets, the second arch-wire including loops to exert a force on incisiors.

### OBJECTS OF THE INVENTION

The technical task of the present invention is to improve the prior art by eliminating the drawbacks mentioned hereinabove.

Within such technical task, it is an object of the present invention to provide an orthodontic appliance that may be anchored to the teeth or to points selected of the mouth, thus allowing to obtain the movement of the tooth or of the set of teeth to be repositioned without the need of acting as a lever on the adjacent teeth.

Moreover, since it is possible to select the anchoring points or teeth, carrying out torque movements becomes also possible, thus adopting a favourable biomechanics. Another object of the present invention is to provide an orthodontic appliance that allows the soft and physiological movement of a tooth to be repositioned having a low load-deflection coefficient and using low-friction forces.

Another object of the present invention is that the appliance can be applied alone or in addition to other traditionally used orthodontic appliances.

These and other objects are all achieved by the orthodontic appliance according to independent claim 1.

### BRIEF DESCRIPTION OF THE DRAWINGS

These and further advantages shall be better understood by the man skilled in the art from the following description and annexed drawings, provided as an example, wherein:
figure 1 is a perspective view of an arch wire provided with stressing elements for lingual application according to the invention;
figure 2 is a perspective view of a further version of the arch wire provided with stressing elements for lingual application according to the invention;
figure 3 is a top view of a plaster reproduction of a dental arch with connection means for lingual application of the arch wire provided with stressing elements according to the invention;
figure 4 is a top view of a plaster dental arch according to figure 3 wherein the arch wire provided with stressing elements according to figure 1 and/or 2 has been applied;
figure 5 is a top image in original corresponding to figure 4;
figure 6 is a perspective view of an arch wire provided with stressing elements for vestibular application according to the invention;
figure 7 is a front image of dental arch in original wherein the arch wire provided with stressing elements of figure 6 is about to be applied;
figure 8 shows a different method of fixing the stressing elements the arch wire of figure 6 or 7 is provided with;
figure 9 shows a subsequent step of the applying of the arch wire provided with stressing elements according to figure 7;
figure 10 is a front image of a dental arch in original according to the invention as applied in the vestibular version;
figure 11 is a front image of a dental arch in original according to the invention as applied in the vestibular version of an arch wire section;
figure 12 shows a series of connection means usable according to the invention as applied in the lingual version;
figure 13 shows a further version of the connection means of figure 12;
figure 14 is an enlargement of some of the connection means of figure 12;
figure 15 shows a front, side and top view of a type of handmade connection means usable according to the invention applied in the lingual version;
figure 16 shows a front, side and top view of a further type of handmade connection means provided with fixing linking,
figure 17 is a schematic representation of a dental arch depicting the main axes of a tooth.

### EMBODIMENTS OF THE INVENTION

With reference to the figures, reference numeral 1 globally indicates an orthodontic appliance according to the invention. Appliance 1 may be applied on a traditional fixed appliance consisting of an arch wire 2 of metal material, which is inserted into plates (brackets) 3, consisting of metal or ceramic materials, according to the known methods.

Appliance 1 may also be applied on an appliance consisting of a brace aligner, generally of transparent material.

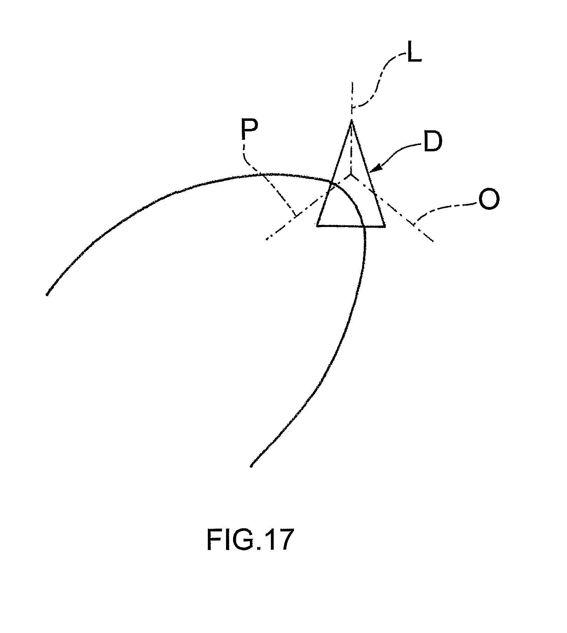

Figure 17 schematically shows a dental arch and a tooth D belonging to such dental arch. L indicates the longitudinal axis of tooth D and 0 the horizontal axis thereof, tangential to the dental arch itself. P indicates the axis perpendicular to the dental arch and to axes L and O.

The concurrent use of appliance 1 with traditionally used appliances allows obtaining the movement of one or more teeth in a concurrent manner in different directions. In fact, while the traditional wire 2 and/or the brace aligner allow tooth alignment movements along the direction of the dental arch and tooth rotation movements around the longitudinal axis L thereof, appliance 1 allows obtaining torque or third degree movements, tooth alignment movements along the dental arch direction, movements along axis P and also of tooth rotation about its horizontal axis O, not all obtainable by the traditionally used appliances.

In this way, the largest movements are often obtained by the proposed appliance 1 while small movements and/or aesthetic modifications are obtained by the appliances provided with traditional mechanics and/or brace aligners.

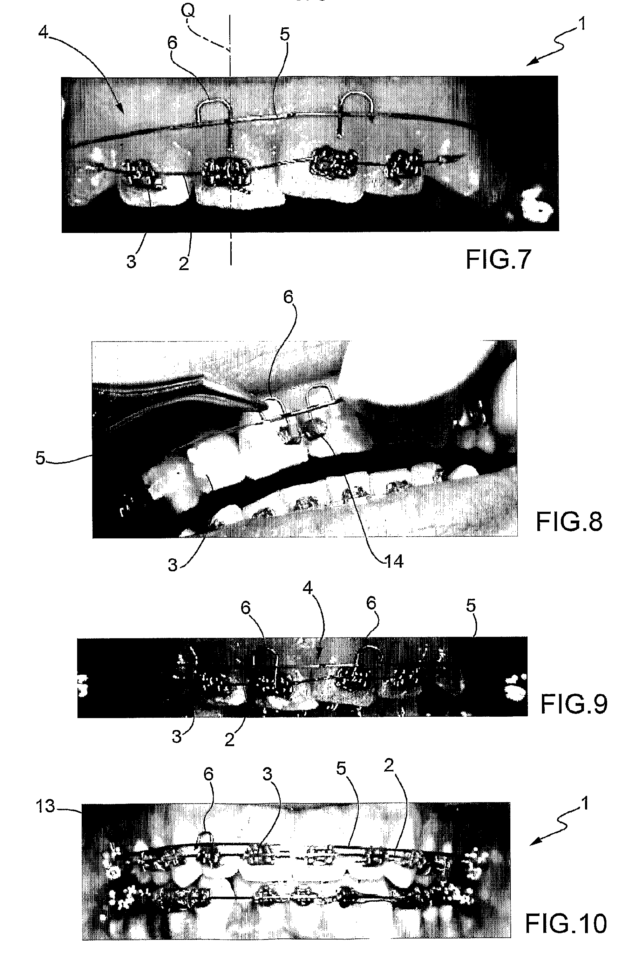

Appliance 1 may also be applied without the aid of a traditional or brace appliance and thus be applied alone, as in figure 8.

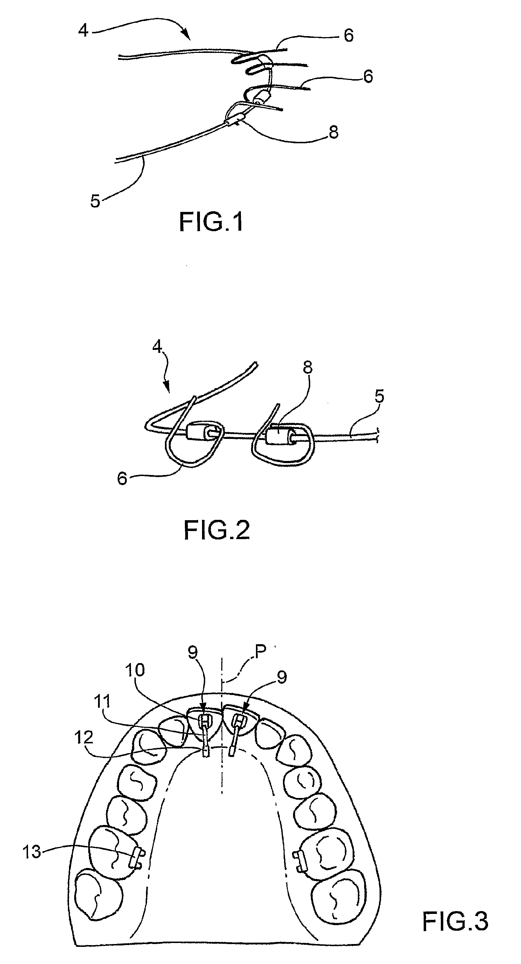

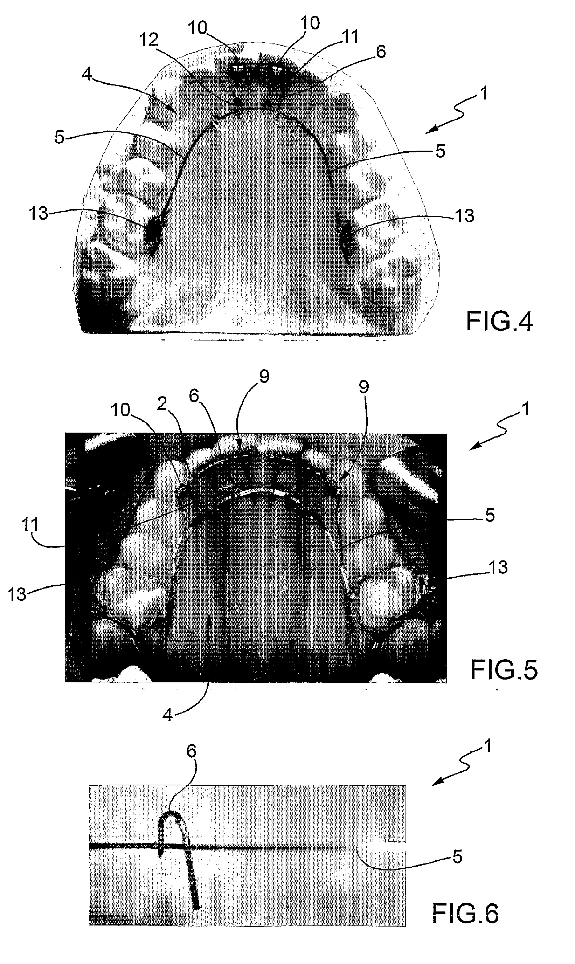

Appliance 1 may be applied both to the inside portion of the dental arch (lingual version, figures 1-5) and to the outside portion of the dental arch (vestibular version, figures 6-11).

Appliance 1 comprises a wire 5 that determines a driving force for the movement of the tooth/teeth to be repositioned directed along axis P substantially perpendicular to the wall of the tooth itself and/or along the direction of the dental arch and/or along the horizontal axis 0 of the tooth itself.

As shown in figures 5, 10 and 11, when appliance 1 is combined with a traditional or brace appliance, wire 5 constitutes a second arc or arc portion 4, relative to the first arc formed by wire 2 of the traditional appliance.

Wire 5 may be of metal, mainly steel or other material such as beta titanium, beta titanium and nickel-titanium alloys; wire 5 may have a variable thickness and a square, round, rectangular section or other shape; wire 5 may be solid or hollow.

Appliance 1 further comprises one or more stressing elements (spurs) 6 integral to the wire 5 of the second arc or arc portion 4. Such stressing elements 6, when positioned on the tooth, extend at least partly along an axis Q substantially perpendicular to the plane where wire 5 lies to which they are fixed.

Usually, appliance 1 uses hooking points distant from each other, a wire 5 and one or more stressing elements 6 with smaller cross-section than the cross-section of wire 5. In this way, a low load-deflection coefficient is obtained for obtaining low friction forces that determine a physiological movement of the tooth to be repositioned. In the vestibular application of appliance 1, as it is seen in the sequence of figures 6-11, the stressing elements 6 are inserted into holes 7 already set up on the plates (brackets) 3, usually used for traditional appliances or of any other known type.

The stressing elements 6 may be fixed to the dental arch also through small tubes 14 or by resin, thus allowing the concurrent use of brace aligners generally of a transparent material.

The stressing elements 6 comprise a segment having a bent hooked shape and can exhibit various shapes and types of shaping, according to the force to be applied to the tooth to be repositioned, to the desired flexibility of wire 5 of the second arc or arc portion 4 and to the possibility of adapting the same to the position of the tooth they are applied to. The stressing elements 6 are integral to wire 5 and may be fixed thereto by welding, melting or insertion into wire 5 in seats obtained into small hollow cylinders 8 provided on wire 5 and positioned in the areas of interest. In this way, the insertion and fixing of the stressing elements 6 are facilitated.

Such stressing elements 6 may be in single piece with said wire 5.

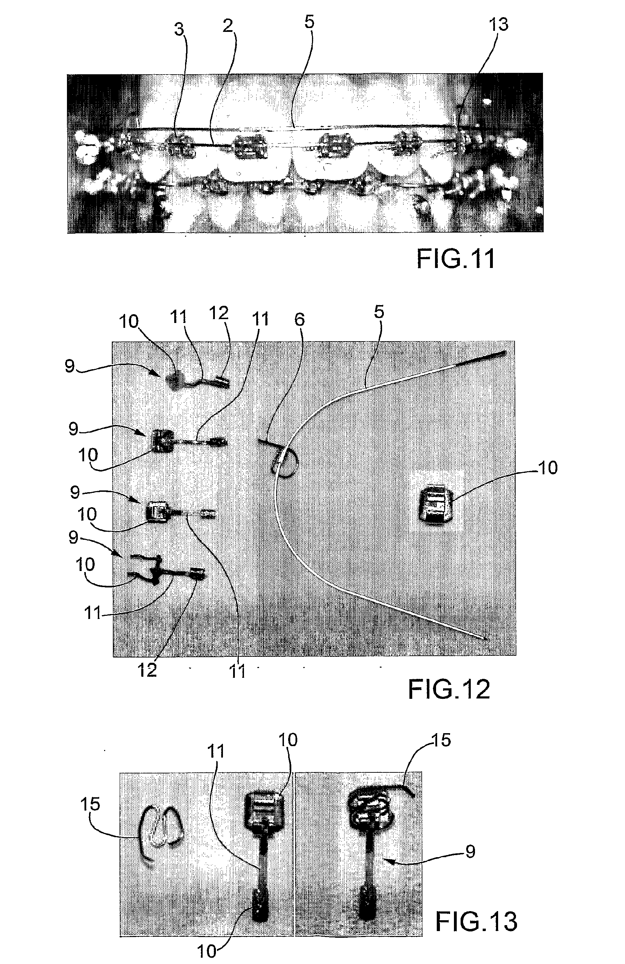

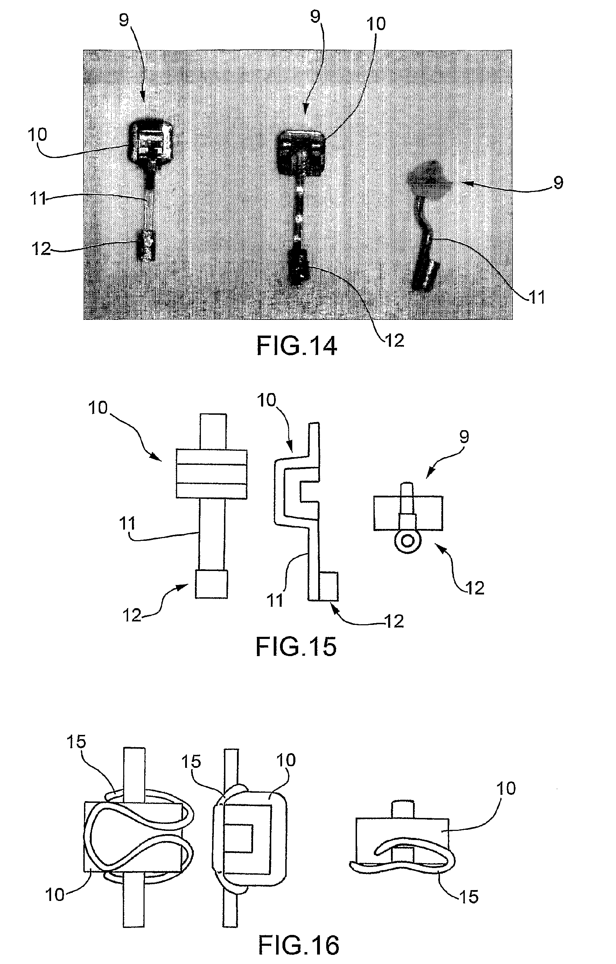

In the lingual version, appliance 1 further comprises connection means 9, which may be either traditional or a new model, which are fixed to the selected teeth. Such connection means 9 consist of a joints 10, differently formed and illustrated as an example in figures 12 - 16, to be fixed to the inside wall of the tooth and through which the traditional arch wire 2 optionally passes. Such connection means 9 may be the those marketed under the name joint Leone, joint Forestadent by the companies of the same name (figures 12 - 14) or they may be handcrafted (figures 15 and 16).

Such joints 10 may consist of resin and/or small tubes for the fixing to the tooth to be repositioned.

Such connection means 9 further consist of an end 11 which extends from joint 10 and ends at 12.

End 12 has any shape suitable for receiving the stressing element 6. End 12 has, for example, a hollow cylinder shape and the stressing element 6 is optionally inserted therein.

The connection means 9 may also consist of small tubes or resin and may also have other shapes and/or ways of connection to the stressing means 6, without departing from the scope of protection of the present invention.

The connection means 9 may also be linked in another manner, exhibiting at least one fixing linking 15 which may have various shapes and types, among which that with self-linking clips, to be inserted and/or locked into joints 10 of the connection means 9 for fixing wire 2 of the traditional appliance. Such fixing linking 15 may be of metal, elastic or other materials.

The presence of the fixing linking 15 allows obtaining a facilitated linking.

The presence of the connection means 9, due to the fact that, on the lingual side, the space available for working is smaller than the vestibular side, allows an easier assembly of appliance 1 and improves the biomechanical aspect of the appliance itself. Thanks to the presence of the connection means 9, in fact, the wire that determines the traction may have a greater 10 length, determining a lower load-deflection coefficient.

As shown in figure 3-5, the second arc or arc portion 4 exhibits an anchoring system 13 positioned on the molar teeth wherein wire 5 is locked on a plate positioned in the molar tooth itself. The anchoring system 13, however, can be applied to any selected tooth, as illustrated in figure 11, and/or to any point of the mouth, for example skeletal anchoring wherein wire 5 is anchored to the palate through the use of mini-screws or other anchoring devices.

The fact that the second arc or arc portion 4 exhibits an anchoring point 13, positioned on the molar teeth or optionally any other point of the mouth, overcomes the problem of traditional appliances wherein, to reposition a tooth, a lever action is exerted on the adjacent teeth, causing a consequent relative movement thereof. In this way, instead, the movement of the tooth to be repositioned takes place almost without anchoring loss.

The present invention has been described according to preferred embodiments but equivalent variants may be conceived without departing from the scope of protection offered by the following claims.

## Claims

1. Orthodontic appliance, applicable alone or combined with a traditional orthodontic appliance, comprising at least one wire (5) forming an arc or arc portion (4) and to which one or more stressing elements (6) are integral, suitable to exerting a force on a tooth to be repositioned, said one or more stressing elements (6), when positioned on the tooth, extending at least partly along an axis (Q) substantially perpendicular to the plane where the wire (5) lies, said one or more stressing elements (6) comprising a segment bent into a hook whose free end is suitable for stressing the tooth to be repositioned, said one or more stressing elements (6) having another end fixed to said at least one wire (5) forming an arc or arc portion (4),
**characterised in that**
said appliance also comprises connection means (9), plates (3), resin and/or tubes (14) for connection, in use, of said free end of said one or more stressing elements (6) to said tooth.

2. Orthodontic appliance, wherein said wire (5) and said one or more stressing elements (6) being configured for determining, in use, the movement of the tooth on which they are acting along an axis (P) substantially perpendicular to the dental arch of the mouth.

3. Orthodontic appliance according to claim 1 or 2,
wherein said wire (5) and said one or more stressing elements (6) are configured for determining the alignment of the tooth on which they are acting along the direction of the dental arch.

4. Orthodontic appliance according to any one of the previous claims, wherein said wire (5) and said one or more stressing elements (6) are configured for determining the rotation of the tooth on which, in use, they act around a horizontal axis (O) substantially tangential to the dental arch.

5. Orthodontic appliance according to any one of the previous claims, comprising an anchoring system (13) designed to fix said wire (5) to an anchoring point in the mouth.

6. Orthodontic appliance according to claim 5, wherein said anchoring system (13) consists of said wire (5) fixable to any tooth and/or skeletal fixing devices fixable to any point of the mouth, for example the palate.

7. Orthodontic appliance according to any one of the previous claims, wherein said wire (5) consists of metal material selected from steel, alloys of beta titanium, nickel-titanium.

8. Orthodontic appliance according to any one of the previous claims, wherein said one or more stressing elements (6) are fixed to said wire (5) through welding or melting and/or insertion into seats obtained in small hollow cylinders (8) provided on said wire (5).

9. Orthodontic appliance according to claim 1, wherein said one or more stressing elements (6) are in single piece with said wire (5).

10. Orthodontic appliance according to claim 1, wherein said connection means (9) consist, in lingual version, of:
a joint (10), to be fixed, in use, to the tooth to be repositioned,
an elongated body (11) that extends from said joint (10) and that ends with an end (12) wherein said stressing element (6) is inserted.

11. Orthodontic appliance according to claim 1 or 10,
wherein said connection means (9) comprise at least a fixing linking (15) to be inserted and/or locked in at least one joint (10) of said connection means (9).

12. Orthodontic appliance according to claim 11, applicable combined with a traditional orthodontic appliance, wherein said at least one fixing linking (15) is suitable for fixing the traditional appliance.

13. Appliance according to any one of the previous claims, wherein said wire (5) has a larger cross-section than the cross-section of said stressing element (6).

## Patentansprüche

1. Kieferorthopädische Vorrichtung, die allein oder in Verbindung mit einer herkömmlichen kieferorthopädischen Vorrichtung angewendet werden kann, umfassend mindestens einen Draht (5), der einen Bogen oder einen Bogenabschnitt (4) bildet und mit dem eines oder mehrere Spannelemente (6) einstückig sind, die geeignet sind, eine Kraft auf einen zu repositionierenden Zahn auszuüben, wobei sich das eine oder die mehreren Spannelemente (6), wenn sie auf dem Zahn positioniert sind, zumindest teilweise entlang einer Achse (Q) erstrecken, die im Wesentlichen perpendikulär zu der Ebene ist, in der der Draht (5) liegt, wobei das eine oder die mehreren Spannelemente (6) ein Segment umfassen, das zu einem Haken gebogen ist, dessen freies Ende geeignet ist, den zu repositionierenden Zahn zu belasten, wobei das eine oder die mehreren Spannelemente (6) ein anderes Ende haben, das an dem mindestens einen Draht (5) befestigt ist, der einen Bogen oder einen Bogenabschnitt (4) bildet,
**dadurch gekennzeichnet, dass**
diese Vorrichtung außerdem Verbindungsmittel (9), Platten (3), Harz und/oder Röhren (14) zum Verbinden beim Gebrauch des freien Endes von dem einen oder den mehreren Spannelementen (6) mit dem Zahn umfasst.

2. Kieferorthopädische Vorrichtung nach Anspruch 1, wobei der Draht (5) und das eine oder die mehreren Spannelemente (6) gestaltet sind, um beim Gebrauch die Bewegung des Zahns, auf den sie wirken, entlang einer Achse (P) zu bedingen, die im Wesentlichen perpendikulär zum Zahnbogen des Mundes ist.

3. Kieferorthopädische Vorrichtung nach Anspruch 1 oder 2, wobei der Draht (5) und das eine oder die mehreren Spannelemente (6) gestaltet sind, um die Ausrichtung des Zahns, auf den sie wirken, entlang der Richtung des Zahnbogens zu bestimmen.

4. Kieferorthopädische Vorrichtung nach einem der vorhergehenden Ansprüche, wobei der Draht (5) und das eine oder die mehreren Spannelemente (6) gestaltet sind, um die Drehung des Zahns, auf den sie beim Gebrauch wirken, um eine horizontale Achse (0) zu bedingen, die im Wesentlichen tangential zum Zahnbogen ist.

5. Kieferorthopädische Vorrichtung nach einem der vorhergehenden Ansprüche, die ein Verankerungssystem (13) umfasst, das gestaltet ist, um den Draht (5) an einem Verankerungspunkt im Mund zu befestigen.

6. Kieferorthopädische Vorrichtung nach Anspruch 5, wobei das Verankerungssystem (13) aus dem Draht (5) besteht, der an jedem Zahn und/oder an skelettalen Fixiervorrichtungen befestigt werden kann, die an jeder Stelle des Mundes, wie z.B. dem Gaumen, befestigt werden können.

7. Kieferorthopädische Vorrichtung nach einem der vorhergehenden Ansprüche, wobei der Draht (5) aus einem Metallwerkstoff besteht, der aus Stahl, Beta-Titan-Legierungen und Nickel-Titan ausgewählt ist.

8. Kieferorthopädische Vorrichtung nach einem der vorhergehenden Ansprüche, wobei das eine oder die mehreren Spannelemente (6) an dem Draht (5) durch Schweißen oder Schmelzen und/oder durch Einfügen in Sitze befestigt werden, die in kleinen Hohlzylindern (8) realisiert sind, die auf dem Draht (5) vorgesehen sind.

9. Kieferorthopädische Vorrichtung nach Anspruch 1, wobei das eine oder die mehreren Spannelemente (6) in einem einzigen Stück mit dem Draht (5) ausgeführt sind.

10. Kieferorthopädische Vorrichtung nach Anspruch 1, wobei die Verbindungsmittel (9) bei der lingualen Version aus Folgendem bestehen:
einem Verbindungsstück (10) zur Befestigung beim Gebrauch an dem zu repositionierenden Zahn,
einem länglichen Körper (11), der sich von dem Verbindungstück (10) erstreckt und der mit einem Ende (12) endet, in das das Spannelement (6) eingefügt ist.

11. Kieferorthopädische Vorrichtung nach Anspruch 1 oder 10, wobei die Verbindungsmittel (9) mindestens eine Befestigungsverbindung (15) zum Einfügen und/oder Einrasten in mindestens ein Verbindungsstück (10) der Verbindungsmittel (9) umfasst.

12. Kieferorthopädische Vorrichtung nach Anspruch 11, die in Verbindung mit einer herkömmlichen kieferorthopädischen Vorrichtung angewendet werden kann, wobei sich die mindestens eine Befestigungsverbindung (15) zum Befestigen der herkömmlichen Vorrichtung eignet.

13. Kieferorthopädische Vorrichtung nach einem der vorhergehenden Ansprüche, wobei der Draht (5) einen Querschnitt hat, der größer als der Querschnitt des Spannelements (6) ist.

## Revendications

1. Dispositif orthodontique, applicable seul ou combiné avec un dispositif orthodontique traditionnel, comprenant au moins un fil (5) formant un arc ou une portion d'arc (4) et duquel sont solidaires un ou plusieurs éléments de sollicitation (6), adaptés pour exercer une force sur une dent à repositionner, lesdits un ou plusieurs éléments de sollicitation (6), quand ils sont positionnés sur la dent, s'étendant au moins en partie suivant un axe (Q) sensiblement perpendiculaire au plan dans lequel se trouve le fil (5), lesdits un ou plusieurs éléments de sollicitation (6) comprenant un segment plié en un crochet dont l'extrémité libre est adaptée pour solliciter la dent à repositionner, lesdits un ou plusieurs éléments de sollicitation (6) ayant une autre extrémité fixée audit au moins un fil (5) formant un arc ou une portion d'arc (4),
**caractérisé en ce que**
ledit dispositif comprend également des moyens de connexion (9), des plaques (3), de la résine et/ou des tubes (14) pour la connexion, durant l'utilisation, de ladite extrémité libre desdits un ou plusieurs éléments de sollicitation (6) à ladite dent.

2. Dispositif orthodontique selon la revendication 1, dans lequel ledit fil (5) et lesdits un ou plusieurs éléments de sollicitation (6) sont configurés pour déterminer, durant l'utilisation, le mouvement de la dent sur laquelle ils agissent suivant un axe (P) sensiblement perpendiculaire à l'arcade dentaire de la bouche.

3. Dispositif orthodontique selon la revendication 1 ou 2, dans lequel ledit fil (5) et lesdits un ou plusieurs éléments de sollicitation (6) sont configurés pour déterminer l'alignement de la dent sur laquelle ils agissent suivant la direction de l'arcade dentaire.

4. Dispositif orthodontique selon l'une quelconque des revendications précédentes, dans lequel ledit fil (5) et lesdits un ou plusieurs éléments de sollicitation (6) sont configurés pour déterminer la rotation de la dent sur laquelle ils agissent, durant l'utilisation, autour d'un axe horizontal (0) sensiblement tangentiel à l'arcade dentaire.

5. Dispositif orthodontique selon l'une quelconque des revendications précédentes, comprenant un système d'ancrage (13) conçu pour fixer ledit fil (5) à un point d'ancrage dans la bouche.

6. Dispositif orthodontique selon la revendication 5, dans lequel ledit système d'ancrage (13) comprend ledit fil (5) pouvant être fixé à n'importe quelle dent et/ou des dispositifs de fixation osseuse pouvant être fixés à n'importe quel point de la bouche, par exemple le palais.

7. Dispositif orthodontique selon l'une quelconque des revendications précédentes, dans lequel ledit fil (5) est constitué d'un matériau métallique sélectionné parmi l'acier, des alliages de titane beta, nickel-titane.

8. Dispositif orthodontique selon l'une quelconque des revendications précédentes, dans lequel lesdits un ou plusieurs éléments de sollicitation (6) sont fixés audit fil (5) par soudure ou fusion et/ou insertion dans des sièges obtenus dans de petits cylindres creux (8) disposés sur ledit fil (5).

9. Dispositif orthodontique selon la revendication 1, dans lequel lesdits un ou plusieurs éléments de sollicitation (6) sont d'une seule pièce avec ledit fil (5).

10. Dispositif orthodontique selon la revendication 1, dans lequel lesdits moyens de connexion (9) comprennent, en version linguale :
un joint (10) destiné à être fixé, durant l'utilisation, à la dent à repositionner,
un corps allongé (11) qui s'étend à partir dudit joint (10) et qui se termine avec une extrémité (12) dans laquelle ledit élément de sollicitation (6) est inséré.

11. Dispositif orthodontique selon la revendication 1 ou 10, dans lequel lesdits moyens de connexion (9) comprennent au moins une liaison de fixation (15) destinée à être insérée et/ou bloquée dans au moins un joint (10) desdits moyens de connexion (9) .

12. Dispositif orthodontique selon la revendication 11 applicable en combinaison avec un dispositif orthodontique traditionnel, dans lequel ladite au moins une liaison de fixation (15) est adaptée pour fixer le dispositif traditionnel.

13. Dispositif orthodontique selon l'une quelconque des revendications précédentes, dans lequel ledit fil (5) a une section transversale plus grande que la section transversale dudit élément de sollicitation (6).
